(19) Europäisches Patentamt
European Patent Office
Office européen des brevets

(11) **EP 4 679 691 A1**

(12) **EUROPEAN PATENT APPLICATION**

(43) Date of publication:
**14.01.2026   Bulletin 2026/03**

(21) Application number: **24188081.4**

(22) Date of filing: **11.07.2024**

(51) International Patent Classification (IPC):
*H02M 1/00* (2006.01)    *H02M 1/15* (2006.01)
*H02M 1/42* (2007.01)    *H02M 3/00* (2006.01)
*H02M 3/158* (2006.01)   *H02M 3/28* (2006.01)
*H02J 7/02* (2016.01)    *H02M 1/10* (2006.01)

(52) Cooperative Patent Classification (CPC):
**H02M 1/007; H02M 1/0043; H02M 1/0074;
H02M 1/0077; H02M 1/15; H02M 1/4233;
H02M 3/01; H02M 3/158; H02M 3/285;** B60L 53/20;
H02J 7/02; H02M 1/10; H02M 3/1586

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Infineon Technologies Austria AG
9500 Villach (AT)**

(72) Inventors:
• **ESCUDERO RODRIGUEZ, Manuel
9500 Villach (AT)**

• **KUTSCHAK, Matteo-Alessandro
9072 Ludmannsdorf (AT)**
• **CHEN, Mengxing
9580 Villach (AT)**

(74) Representative: **Westphal, Mussgnug  & Partner,
Patentanwälte mbB
Werinherstraße 79
81541 München (DE)**

Remarks:
Amended claims in accordance with Rule 137(2)
EPC.

(54) **POWER PULSATION OF SERIES-PARALLEL DC/DC CONVERTER**

(57)     A power conversion system and a respective method are described herein. In one embodiment, the system comprises a capacitor bank including at least a first capacitor and a second capacitor coupled in series, wherein the capacitor bank is connected between a first input terminal and a second input terminal and wherein the first and second capacitors are connected at a center node. The system further comprises an AC/DC converter configured to provide a DC input voltage to the capacitor bank based on an AC voltage provided by the AC supply, and a DC/DC switching converter including a first branch, a second branch, and a switching circuit. The first branch is configured to convert a first voltage buffered by the first capacitor into an first output voltage, and the second branch is configured to convert a second voltage buffered by the second capacitor into a second output voltage. The switching circuit is configured to provide an output voltage based on the first output voltage and the second output voltage. Furthermore, the system comprises a controller configured to generate a plurality of switching signals for the DC/DC switching converter to control the switching operation of the first branch and the second branch of the DC/DC switching converter, such that the power converted by the first branch and the power converted by the second branch are modulated oppositely to each other in synchronization with a frequency of the AC supply.

Fig. 1

**Description**

**TECHNICAL FIELD**

The present disclosure relates to the field of switching converters, in particular to DC/DC converters.

**BACKGROUND**

DC/DC converters are commonly used in a large variety of applications to efficiently convert supply voltages. High power DC/DC converters are, for example, used in the DC/DC back-end stage of an Electric Vehicle (EV) charging station (off-board) or in an EV on-board charger (OBC). The front-end converter stage is usually an AC/DC converter with Power Factor Correction (PFC). Dependent on the application the same converter design of the back-end stage may be used to operate with a single-phase (1-phase, e.g. $1 \times 230$ V) and a three-phase (3-phase, e.g. $3 \times 230$ V) AC voltage supply of the front-end stage. Typically, the DC output voltages may vary from 250-850 V with a maximum output power of, for example, 7.3 kW for a 1-phase AC supply of the front-end stage and 11 kW for a 3-phase AC supply of the front-end stage.

For a 3-phase PFC front-end converter stage the intermediate DC bus voltage may be adjusted to approximately 800 V, wherein the output of the back-end converter stage (DC/DC) may have a very wide output voltage range (as mentioned, 250-850 V). To cover such a wide range, DC/DC converters have been proposed that may be reconfigured in a serial or a parallel configuration. With such a converter topology conversion efficiencies of 96% or more may be achieved.

With a 3-phase feeding of the front-end converter stage (PFC AC/DC converter), the power delivery to the back-end converter stage (DC/DC converter) is substantially constant. Therefore, there is no significant voltage ripple in a bulk capacitor, which buffers the DC bus voltage. In this case, the bulk capacitor bank could be potentially removed. The bulk capacitor is also referred to as DC bus capacitor or short bus capacitor, wherein the capacitor may be replaced by a capacitor bank including several individual capacitors.

With 1-phase feeding of the front-end converter stage, the power provided by the PFC AC/DC converter is pulsating at the grid frequency, while electric power is continuously taken from the output of the back-end converter stage. Therefore, the voltage ripple at the bulk capacitor and requirements for the bulk capacitor with regard to the RMS current carrying capability is increased as compared with the 3-phase operation. As a consequence, a much higher capacitance of the bulk capacitor is needed for the 1-phase operation.

Accordingly, an improved switching converter concept is disclosed which reduces the voltage ripple at the bulk capacitor and/or the requirements for the bulk capacitor regarding the RMS current carrying capability.

**SUMMARY**

The mentioned improvement is achieved by the system of claims 1 and 13 as well as by the method of claim 8. Various examples and further developments are covered by the dependent claims.

Accordingly, a power conversion system is described herein. In one embodiment, the system comprises a capacitor bank including at least a first capacitor and a second capacitor coupled in series, wherein the capacitor bank is connected between a first input terminal and a second input terminal and wherein the first and second capacitors are connected at a center node. The system further comprises an AC/DC converter configured to provide a DC input voltage to the capacitor bank based on an AC voltage provided by the AC supply, and a DC/DC switching converter including a first branch, a second branch, and a switching circuit. The first branch is configured to convert a first voltage buffered by the first capacitor into an first output voltage, and the second branch is configured to convert a second voltage buffered by the second capacitor into a second output voltage. The switching circuit is configured to provide an output voltage based on the first output voltage and the second output voltage. Furthermore, the system comprises a controller configured to generate a plurality of switching signals for the DC/DC switching converter to control the switching operation of the first branch and the second branch of the DC/DC switching converter, such that the power converted by the first branch and the power converted by the second branch are modulated oppositely to each other in synchronization with a frequency of the AC supply.

According to another embodiment, the system comprises an capacitor bank including at least two capacitors coupled in series, wherein the capacitor bank is connected between a first input terminal and a second input terminal and wherein the two capacitors are connected at a center node. The system further comprises an AC/DC converter configured to provide a DC input voltage to the capacitor bank based on an AC supply; a DC/DC switching converter configured to convert the input voltage into an output voltage; and a controller configured to generate a plurality of switching signals for the DC/DC switching converter to control the switching operation of the DC/DC switching converter. The controller is further configured to control the switching operation of the DC/DC switching converter such that the electric power converted by the DC/DC converter is modulated in accordance with a grid frequency of the AC supply.

Moreover, a power conversion method is disclosed. In one embodiment, the method includes, converting an AC voltage, which is provided by an AC supply, into a DC input voltage, and applying the DC input voltage to a capacitor bank that is composed of a series connection of at least a first capacitor and a second capacitor coupled at a center point. The method further includes converting a first voltage buffered by the first capacitor into a first output voltage by a first branch of a DC/DC converter, and converting a second voltage buffered by the second capacitor into a second output voltage by a second branch of the DC/DC converter. An output voltage is generated based on the first output voltage and the second output voltage. The power converted in the first branch and the power converted in the second branch is modulated oppositely to each other in synchronization with a frequency of the AC supply.

## BRIEF DESCRIPTION OF THE DRAWINGS

The invention can be better understood with reference to the following drawings and descriptions. The components in the figures are not necessarily to scale; instead emphasis is placed upon illustrating the principles of the invention. In the figures, like reference numerals designate corresponding parts. In the drawings:

Figure 1 illustrates an exemplary converter topology of a DC/DC converter, which may be used in connection with the embodiments described herein.

Figure 2 illustrates an example of a front end-stage with a 1-phase PFC converter that may be used to provide the input voltage for the DC/DC converter of Fig. 1.

Figure 3 illustrates voltage and electric power at an input capacitor of the back-end stage during 1-phase operation with constant power conversion.

Figure 4 is a simplified block diagram of the overall power supply (front-end and back-end).

Figure 5 illustrates voltage and electric power at input capacitors of the back-end stage with pulsating / modulated power conversion in the two branches of the back-end converter stage.

Figure 6 illustrates, like Fig. 5, voltage and electric power at input capacitors of the back-end stage but for a different modulation of the power passing through the back-end converter stage.

Figure 7 illustrates one embodiment with a front-end stage that charges both input capacitors simultaneously, wherein the neutral point N is not connected to the mid-point of the bus capacitor bank.

## DETAILED DESCRIPTION

The embodiments described herein are in the context of an EV charging station or EV on-board charger, which are basically composed of a front-end stage with a PFC AC/DC converter and back-end converter stage which includes one or more DC/DC converters. The front-end converter stage provides the DC input voltage $V_{IN}$ for the back-end converter stage (also referred to as the DC bus voltage). It is understood that the concepts described herein may be readily applied in other applications different from EV charging stations or the like.

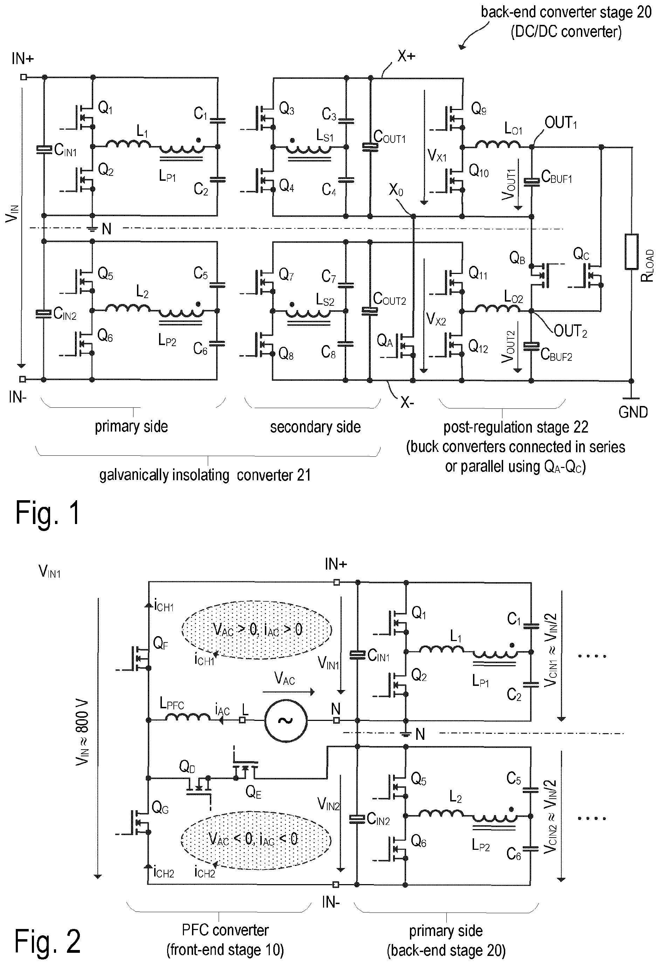

As mentioned, the front-end stage may be supplied either by a 1-phase AC voltage or a 3-phase AC voltage. With a 3-phase feeding of the front-end stage, the power delivery to the back-end converter stage (DC/DC converter) is substantially constant and, therefore, there is no significant voltage ripple across the input capacitor bank (see Fig. 1, input capacitors $C_{IN1}$, $C_{IN2}$). In contrast, thereto, with a 1-phase feeding of the front-end converter stage, the power provided by the PFC AC/DC converter is pulsating at the grid frequency (e.g. 50 Hz), while electric power is continuously taken from the output of the back-end converter stage and consumed by the load. Therefore, the voltage ripple across the input capacitor bank and the requirements for the input capacitors with regard to the RMS current carrying capability is increased as compared with the 3-phase operation. In one straightforward approach, a much higher capacitance can be used in the input capacitor bank. The embodiments describe herein are designed to alleviate the requirements for the input capacitor bank of the DC/D converter.

Fig. 1 illustrates an embodiment of a DC/DC converter that may be used in the back-end stage of an EV charging station or the like. In the depicted example, the DC/DC converter basically includes two branches, wherein each branch includes a galvanically isolating converter with a buck converter connected downstream thereto, and wherein the outputs of the two branches may be selectively connected in series or in parallel. In Fig. 1 the two branches are illustrated by a dash-dotted line, wherein the circuity above the dash-dotted line is associated with the first branch and the circuity below the dash-dotted line is associated with the second branch, and wherein the semiconductor switches $Q_A$, $Q_B$, and Qc can be used to connect the outputs of the two branches either in series or in parallel. In the depicted example, the galvanically isolating converter is a resonant switching converter.

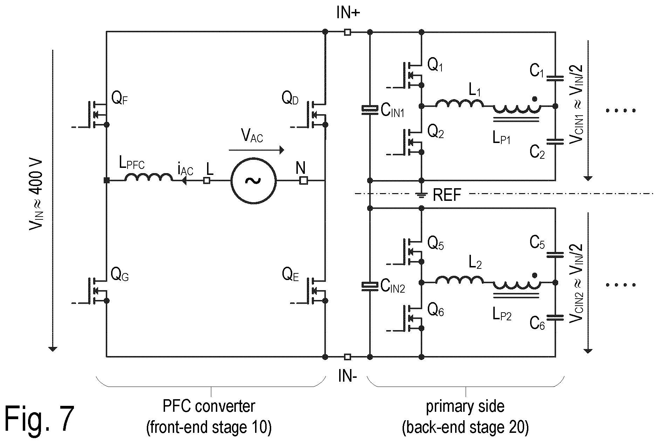

According to Fig. 1 the galvanically isolating converters in the first and second branches include a transformer that separates the primary sides of the converters from the secondary sides. The transformers are composed by the (magnetically coupled) inductors $L_{P1}$ and Lsi (primary and secondary inductor in the first branch forming first transformer) and, respectively $L_{P2}$ and $L_{S2}$ (primary and secondary inductor in the second branch forming second transformer). In the depicted example, the inputs of the two branches are connected in series at the neutral point N of the AC supply. That is, a center node (mid-point) of the DC bus capacitor bank (composed of at least the capacitors $C_{IN1}$ and $C_{IN2}$) is connected to the neutral point N of the AC grid. However, as will be discussed later, this is not necessarily the case (see Fig. 7).

In the depicted example, the primary side in the first branch includes an input capacitor $C_{IN1}$ connected between the input terminal IN+ and the neutral point N, whereas the primary side in the second branch includes an input capacitor $C_{IN2}$ connected between the neutral point N and the input terminal IN-. The total input voltage $V_{IN}$ is applied between the input terminals IN+ and IN-.

The primary side in the first branch further includes a transistor half-bridge composed of the transistors $Q_1$ and $Q_2$. The half-bridge and a series circuit of capacitors $C_1$ and $C_2$ are connected between the input terminal IN+ and the neutral point N. The common circuit node of transistors $Q_1$ and $Q_2$ and the common circuit node of capacitors $C_1$ and $C_2$ are connected via the primary inductor $L_{P1}$ of the mentioned first transformer. An additional inductor Li may be connected in series to the primary inductor $L_{P1}$.

The primary side in the second branch is basically the same as in the first branch. The transistors forming the half-bridge are denoted $Q_5$ and $Q_6$. The half-bridge as well as a series circuit of capacitors $C_5$ and $C_6$ are connected between the input terminal IN+ and the neutral point N. The common circuit node of transistors $Q_5$ and $Q_6$ and the common circuit node of capacitors $C_5$ and $C_6$ are connected via the primary inductor $L_{P2}$ of the mentioned second transformer. An additional inductor $L_2$ may be connected in series to the primary inductor $L_{P2}$.

The secondary side in the first branch also includes a transistor half-bridge. This half-bridge is composed of the transistors $Q_3$ and $Q_4$. The half-bridge and a series circuit of capacitors $C_3$ and $C_4$ are connected between the circuit nodes X+ and $X_0$. The common circuit node of transistors $Q_3$ and $Q_4$ and the common circuit node of capacitors $C_3$ and $C_4$ are connected via the secondary inductor Lsi of the mentioned first transformer. An output capacitor $C_{OUT1}$ is connected in parallel to the series circuit of capacitors $C_3$ and $C_4$.

Similarly, the secondary side in the second branch includes a transistor half-bridge, which is composed of the transistors $Q_7$ and $Q_8$. The half-bridge and a series circuit of capacitors $C_7$ and $C_8$ are connected between the circuit nodes $X_0$ and X-. The common circuit node of transistors $Q_7$ and $Q_8$ and the common circuit node of capacitors $C_7$ and $C_8$ are connected via the secondary inductor $L_{S2}$ of the mentioned second transformer. An output capacitor $C_{OUT2}$ is connected in parallel to the series circuit of capacitors $C_7$ and $C_8$.

The output voltages of the secondary sides of the isolating converters in the first and second branches are denoted as $V_{X1}$ and $V_{X2}$. These voltages, which are buffered by the output capacitors $C_{OUT1}$ and $C_{OUT2}$, are the input voltages for the subsequent buck converters.

In the first branch the buck converter is composed of transistors $Q_9$ and $Q_{10}$, which form a half-bridge between circuit nodes X+ and $X_0$, an output inductor $L_{O1}$ and a buffer capacitor $C_{BUF1}$. The output inductor $L_{O1}$ is connected between the common circuit node of transistors $Q_9$ and $Q_{10}$ and output node $OUT_1$, and the buffer capacitor $C_{BUF1}$ is connected between the output node $OUT_1$ and the circuit node $X_0$.

Similarly, in the second branch the buck converter is composed of transistors $Q_{11}$ and $Q_{12}$, which form a half-bridge between circuit nodes $X_0$ and X-, an output inductor $L_{O2}$ and a buffer capacitor $C_{BUF2}$. The output inductor $L_{O2}$ is connected between the common circuit node of transistors $Q_{11}$ and $Q_{12}$ and output node $OUT_2$, and the buffer capacitor $C_{BUF2}$ is connected between the output node $OUT_2$ and the circuit node X-.

As mentioned above, the buffer capacitors $C_{BUF1}$ and $C_{BUF2}$ can be selectively connected either in parallel or in series. In the first case the voltages $V_{OUT1}$ and $V_{OUT2}$ across the capacitors $C_{BUF1}$ and, respectively, $C_{BUF2}$ are necessarily equal wherein the output currents of the two branches add up to a total output current that is provided to the load $R_{LOAD}$. In the second case, the voltages $V_{OUT1}$ and $V_{OUT2}$ across the capacitors $C_{BUF1}$ and, respectively, $C_{BUF2}$ are added so that a total of $V_{OUT1}+V_{OUT2}$ is provided to the load. In the depicted example, the parallel connection of the buffer capacitors $C_{BUF1}$ and $C_{BUF2}$ is achieved by switching the transistor $Q_A$ (connecting nodes $X_0$ and X-) and Qc (connecting nodes $OUT_1$ and $OUT_2$) on, while transistor Qc is off. Conversely, the series of the buffer capacitors $C_{BUF1}$ and $C_{BUF2}$ is achieved by switching transistor $Q_B$ on (connecting nodes $X_0$ and $OUT_2$), while the transistors $Q_A$ and Qc are off.

In the example depicted in Fig. 1, the transistors are implemented as metal-oxide-semiconductor field-effect transistors (MOSFETs). However, other types of power electronic switches such as insulated gate bipolar transistors (IGBTs) or the like may also be used. Each of the MOSFETs has an intrinsic reverse diode (body diode) which is not explicitly shown in the drawings. Dedicated reverse diodes may be connected in parallel to the transistors' load current paths (e.g. when using IGBTs). Although all transistors are MOSFETs in the present example, this is not necessarily the case in other embodiments. For example, the isolating converter may use IGBTs wherein the buck converters may use MOSFETs. Also the switching circuit composed of transistors $Q_A$, $Q_B$, and Qc may use transistors of a different type than the transistor types used in one of the switching converters.

The drawings do not include the controller and the driver circuits that are needed to generate the gate signals supplied to the gates of the transistors $Q_1$-$Q_{12}$ and $Q_A$-$Q_C$ of the resonant switching converters and buck converters. However, such controllers and driver circuits are as such known in the prior art and thus not discussed herein in greater detail. It is noted, that the resonant switching converter are configured to have a substantially fixed conversion ratio $1/n$, whereas the actual output voltage regulation is accomplished by the buck converters.

The input voltage $V_{IN}$ may be generated by a 3-phase rectifier or a 3-phase PFC AC/DC converter (not shown in the drawings) in the front-end stage. As mentioned, the delivery of electric power from the front-end stage to the back-end DC/DC converter is fairly constant and the requirements for the input capacitors $C_{IN1}$ and $C_{IN2}$ are comparably low. This is different if the input voltage $V_{IN}$ is generated by a 1-phase PFC AC/DC converter in the front-end stage, wherein the back-end DC/DC converter should be able to operate with both, a front-end with a three-phase input as well as a front-end with a single-phase input. Fig. 2 illustrates an example of a 1-phase PFC converter (in the front-end stage) with the neutral point N of the grid connected to the mid-point (center node) of capacitor bank ($C_{IN1}$ and $C_{IN2}$). It is noted that in Fig. 2, only the primary side of the isolating converter is shown to avoid unnecessary reiteration. In the example of Fig. 2, the back-end circuit may be the same as in Fig. 1.

According to Fig. 2, the AC input voltage is applied between the neutral point N and the AC phase L. The PFC converter of the front-end stage that is connected between the terminals IN+ and IN-. The half-bridge is composed of transistors $Q_F$ and $Q_G$, wherein the middle tap of the half-bridge is connected to the phase L via an inductor $L_{PFC}$. Furthermore, the middle-tap of the half-bridge is connected to the neutral point N via transistors $Q_D$ and $Q_E$, which are connected source-to-source (anti-serial). Again, the reverse diodes of the transistors are not explicitly shown in the drawings, but they are nevertheless present. Either the intrinsic reverse diodes are used or dedicated diode elements. As already pointed out for the other transistors, any suitable transistor type may be used.

The function of the PFC AC/DC converter is as such known and thus not discussed herein in greater detail. During positive half-waves ($V_{AC}>0$ V) the inductor current $i_{AC}$, which passes through the inductor $L_{PFC}$, charges the input capacitor $C_{IN1}$ via transistor $Q_F$, whereas during negative half-waves ($V_{AC}<0$ V) the inductor current $i_{AC}$ charges the input capacitor $C_{IN2}$ via transistor $Q_G$. The transistors $Q_D$ and $Q_E$ form one electronic switch which performs the current shaping. It can be seen from Fig. 2, that electric energy is only delivered to input capacitor $C_{IN1}$ during the positive half-wave and only delivered to input capacitor $C_{IN2}$ during the negative half-wave, while the back-end converter stage continuously takes electric power from both capacitors $C_{IN1}$ and $C_{IN2}$. This pulsed energy transfer in 1-phase operation significantly increases the required capacitance. The voltage buffered by capacitor $C_{IN1}$ is denoted as $V_{IN1}$ and the voltage buffered by capacitor $C_{IN2}$ is denoted as $V_{IN2}$, wherein the voltage across the capacitor bank (series connection of $C_{IN1}$ and $C_{IN2}$) is the sum of the two capacitor voltages, i.e. $V_{IN}=V_{IN1}+V_{IN2}$.

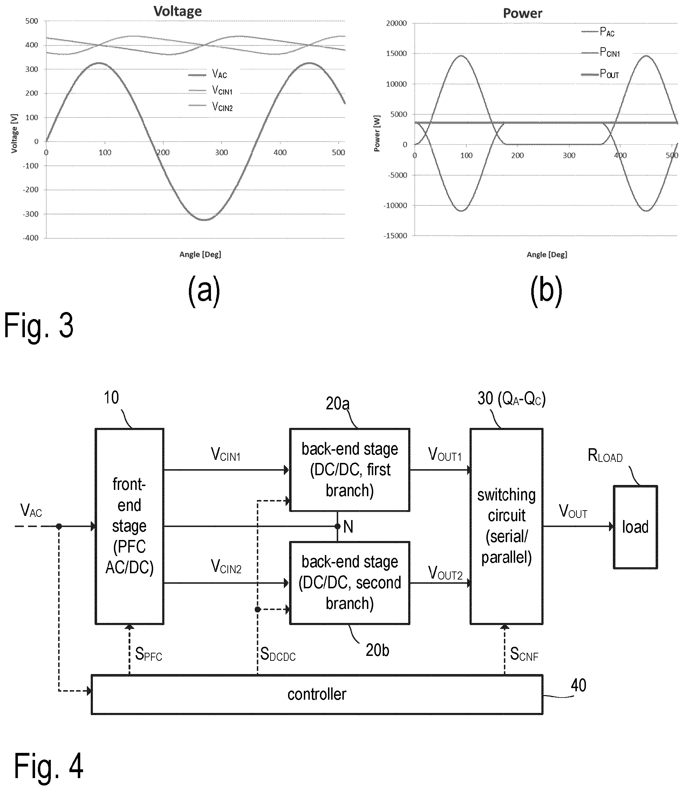

The oscillating power, with which the input capacitors $C_{IN1}$ and $C_{IN2}$ are charged, as well as the slightly varying capacitors voltages are shown in Fig. 3, diagrams (a) and (b). Diagram (a) of Fig. 3 illustrates the AC input voltage $V_{AC}$ and the capacitor voltages $V_{IN1}$ and $V_{IN2}$ which oscillate around $V_{IN}/2$, wherein $V_{IN}$ denotes the DC bus voltage (input voltage for the back-end converter stage). Diagram (b) of Fig. 3 illustrates the AC power $P_{AC}$ delivered to input capacitor $C_{IN1}$ during the positive half-wave (corresponds to the interval 0°-180°), the net power $P_{CIN1}$ provided by the capacitor $C_{IN1}$ for a constant output power $P_{OUT}$.

The embodiments described below aim at reducing the voltage ripple and the requirements for the input capacitors with regard to RMS current carrying capability. According the one aspect of the embodiments, the structure of the DC/DC converter in of the back-end stage is used to pulsate the power taken from the front-end stage to achieve a reduction of the voltage ripple and the requirements for the input capacitor bank (capacitors $C_{IN1}$ and $C_{IN2}$) with regard to RMS current carrying capability. It is understood, that capacitors $C_{IN1}$ and $C_{IN2}$ symbolize the input capacitor bank, which may actually be composed of more than two capacitors.

The above-mentioned effect may be achieved by: pulsating the power through a parallel arrangement of the post-regulation stages (e.g. buck converters); pulsating the power through a series arrangement of the post-regulation stages; or bypassing the power pulsation to the load (e.g. a battery) for PFC AC/DC converters which do not have the neutral point N connected to the mid-point of the capacitor bank.

*Power pulsation through the DC/DC stages connected in series/parallel*: In accordance with one embodiment, the power transfer via the first branch is increased by a certain amount during positive half-waves (during which the front-end stage delivers power to only the input capacitor $C_{IN1}$ and the current rail X+), while the power transfer via the first branch is decreased during negative half-waves by the same amount. Similarly, the power transfer via the second branch is increased by the certain amount during negative half-waves (during which the front-end stage delivers power to only the input capacitor $C_{IN2}$ and the current rail X-), while the power transfer via the second branch is decreased during positive half-waves by the same amount. The terms positive/negative half-wave always refer to the periods of the AC input voltage $V_{AC}$. Thus, the overall output power (provided to the load $R_{LOAD}$, e.g. a battery) of the system is constant.

Fig. 4 illustrates the overall system (power supply) as a block diagram. The front-end stage 10 receives the (single phase) AC input voltage $V_{AC}$ and includes a 1-phase PFC AC/DC converter as already discussed above with reference to Fig. 2. The front-end stage 10 generates the voltages $V_{CIN1} \approx V_{IN}/2$ and $V_{CIN2} \approx V_{IN}/2$ which are supplied to the back-end stage 20, wherein $V_{CIN1}+V_{CIN2}=V_{IN}$. In Fig. 4, the first branch is denoted as 20a and the second branch as 20b. The two branches 20a and 20b generate the output voltages $V_{OUT1}$ and $V_{OUT2}$ (see also Fig. 1), wherein the outputs of the two branches 20a and 20b may be coupled in series or in parallel using the switching circuit 30 (cf. Fig. 1, transistors $Q_A$, $Q_B$, and Qc) to obtain the output voltage $V_{OUT}$. This voltage is supplied to the load $R_{LOAD}$, which may be, for example, a battery of an EV The switching circuit 30 may be regarded as part of the back-end stage 20 but is shown as a separate block to increase the clarity of the illustration. The controller 40 is configured to generate the control signals (e.g. gate signals for transistors $Q_1$-$Q_{12}$, $Q_A$-$Q_F$) for the transistors of the front-end stage 10 and the back-end stage 20 (including the switching circuit 30). Accordingly, the controller is able to control the switching operation of the whole system. Therefore, the controller 40 is able to control the power flow through the two branches by controlling the timing of the switching operation of the front-end stage 10 and the back-end stage 20. In Fig. 4, the control signals for the PFC AC/DC converter 10 are labelled $S_{PFC}$ (e.g. gate signals for transistors $Q_D$-$Q_G$), the control signals for the DC/DC converter 20 are labelled $S_{DCDC}$ (e.g. gate signals for transistors $Q_1$-$Q_{12}$) and the control signals for configuring the output of the DC/DC converter 20 (parallel or series connection) are labelled $S_{CNF}$ (e.g. gate signals for transistors $Q_A$-$Q_C$). Dedicated driver circuits may be used to convert (e.g. pulse-width) modulated control signals into suitable gate voltages. However, such driver circuits (so-called gate drivers) are as such known and therefore not further discussed herein and omitted in the drawings to keep the illustrations simple.

One possible approach for the pulsation of the power flow through the DC/DC converter is to apply a feedforward coefficient $K$, which the controller 40 may use to modulate the power flow through the two branches 20a, 20b of the back-end converter stage 20. In one embodiment, the additional power fed into the two branches of the back-end stage follows the power profile of the PFC AC/DC converter 10 (see equations (1) and (2) below). This has the effect that the direct power transfer from the front-end stage 10 to the output of the back-end stage 20 is increased and power that needs to be buffered by the bus capacitor bank (capacitors $C_{IN1}$ and $C_{IN2}$) is reduced. The phase angle $\omega \cdot t$ of the grid voltage $V_{AC}$ may be estimated (for example with a PLL) or measured.

Accordingly, the power $P_{OUT1}$, $P_{OUT2}$ converted in the two branches 20a, 20b (output voltages $V_{OUT1}$, $V_{OUT2}$, see also Fig. 1) may be modulated as follows:

$$P_{OUT1} = \frac{P_{OUT}}{2}\left(1 + K \cdot sin(\omega t)\right) = \frac{P_{OUT}}{2} + P_{PULSE}, \text{ and} \tag{1}$$

$$P_{OUT2} = \frac{P_{OUT}}{2}\left(1 - K \cdot sin(\omega t)\right) = \frac{P_{OUT}}{2} - P_{PULSE} \tag{2}$$

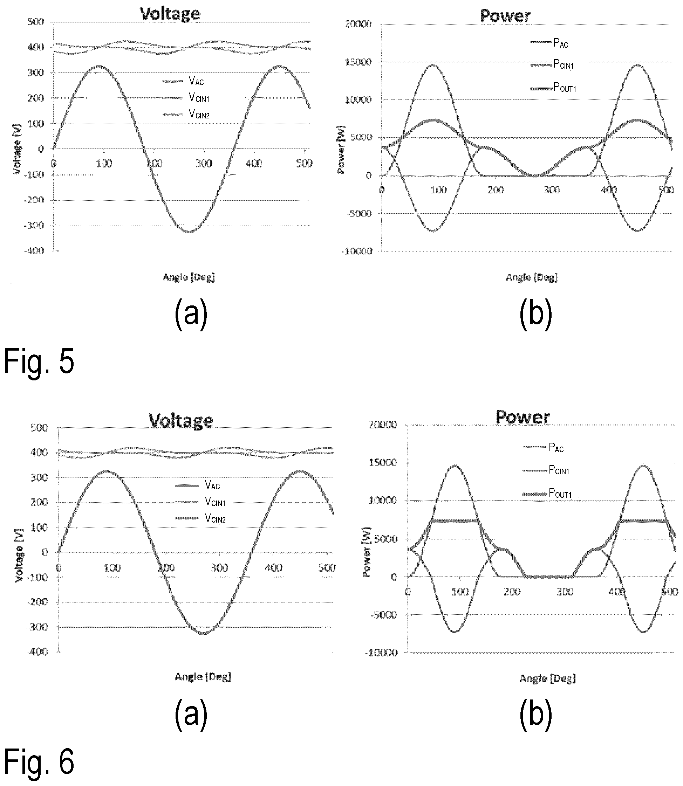

wherein the coefficient $K$ is greater than zero and lower than (or equal to) one (i.e. $0 < K \leq 1$). However, a coefficient $K>1$ is also possible as will be discussed later. The total output power is $P_{OUT} = P_{OUT1}+P_{OUT2}$, wherein $P_{OUT}$ may, during operation, correspond to a set-point value. The diagrams (a) and (b) of Fig. 5 illustrates the pulsation / modulation of the power flow through the two branches of the back-end converter stage.

With the coefficient $K$ being set to one ($K=1$), the power is pulsated following the curve shown in diagram (b) of Fig. 5. In the particular example illustrated in Fig. 3 and 5, the voltage ripple in the bus capacitors $C_{IN1}$ and $C_{IN2}$ could be reduced from 77 V to 48 V peak-to-peak (see Diagram (a) of Fig. 5 vs. diagram (a) of Fig. 3) and the RMS current from 13 A to 8.5 A (RMS) for a 7.3 kW power supply $C_{IN1} = C_{IN2} = 2880 \, \mu F$.

One consequence of pulsating/modulating the power through the DC/DC converter is that the peak power increases, and therefore the average losses and the overall stress will change with regard to a standard control (without power modulation) of the DC/DC converter. However, this effect can be considered during the design process. On the other hand, as it was pointed out in the introduction, due to the derating of the 1-phase feeding, there would be some margin for the power pulsation even without that design consideration. For a full system (PFC converter and DC/DC converter) that can be operated with a 1-phase and 3-phase AC supply, the PFC converter can extract more power for the same stress in 3-phase operation because the higher line-to-line voltages cause less current and therefore less losses. The DC/DC downstream of the PFC converter would need to be designed for a defined maximum power, that would be higher for the 3-phase feeding (where the pulsation of power is not needed) than for the 1-phase feeding (in average). Therefore, that additional headroom can be used for this pulsation, i.e. the DC/DC converter may already be dimensioned for a higher (average) power.

A coefficient K>1 is also possible, with the constraint that the resulting power $P_{OUT1}$ (and $P_{OUT2}$) is does not leave the range from zero to the total output power $P_{OUT}$ as shown in diagram (b) of Fig. 6. With K=2 a minimum voltage ripple across the bus capacitors $C_{IN1}$, $C_{IN2}$ of approximately 40 V peak-to-peak could be achieved in the example application discussed herein (per capacitor bank of the stack). In this case, the minimum RMS current is reduced to 7.9 A (RMS).

Experiments have shown that a further improvement could not be achieved by increasing K to values greater than 2. Fig. 6 illustrates the same curves as Fig. 5 but for K=2 (while K=1 in Fig 5).

The concept illustrates by the examples of Figs. 5 and 6 can be summarized as follows: The controller modulates the power $P_{OUT1}$ converted in the first branch 20a according to a first periodic (e.g. sinusoidal) function, which is in phase (i.e. zero phase shift) with the AC voltage $V_{AC}$ and modulates the power $P_{OUT2}$ converted in the second branch 20b according to a second periodic function, which is 180° phase shifted to the AC voltage $V_{AC}$.

As can be seen from the equations (1) and (2) above, the power $P_{OUT1}$ in the first branch 20a is modulated opposite to the power $P_{OUT2}$ in the second branch 20b. That is, the alternating components $P_{PULSE}$ of $P_{OUT1}$ and $P_{OUT2}$ are (as mentioned) phase shifted by 180 degrees ($\pi$ radians) or, in other words, by half a period of the AC input voltage $V_{AC}$ taken from the grid. This can also be seen from equations (1) and (2), ($P_{PULSE}$ and $-P_{PULSE}$ are phase shifted by 180°). As a consequence, the total output power $P_{OUT} = P_{OUT1}+P_{OUT2}$ is substantially constant. However, this is not necessarily the case. The system may also be configured to provide a pulsating power to the load which is possible for some types of loads such as batteries to be charged. Without the limitation of a constant output power $P_{OUT}$ the concept of modulating the power converted in the two branches of the DC/DC converter in synchronization with the frequency of the AC input voltage may be used to further reduce the voltage ripple and the RMS current in the bus capacitor bank.

As mentioned above, the controller 40 (see Fig. 4) is configured to control the switching operation of the whole system. In particular, the controller 40 is configured to control the power flow through the two branches by controlling the timing of the switching operation of the post-regulation stage 22 of back-end converter 20.

For example, when the outputs of the two branches 20a and 20b are connected in parallel, the power modulation can be achieved by varying (increasing or decreasing) the respective output currents provided by the two output branches. This can be achieved, for example, by adjusting the duty cycle of the pulse-width-modulated (PWM) signal that determines the switching operation of the buck converters in the post-regulation stage 22 (see Fig. 1). Alternatively, the reference used for peak current control may be changed when current-mode control is used for operating the buck converters.

When the outputs of the two branches 20a and 20b are connected in series, the power modulation can be achieved by varying (increasing or decreasing) the respective output voltages $V_{OUT1}$ and $V_{OUT2}$ provided by the two output branches. This can also be achieved, for example, by adjusting the duty cycle of the pulse-width-modulated (PWM) signal that determines the switching operation of the buck converters in the post-regulation stage 22. However, when the post regulation stage is composed of buck converters, the power modulation $P_{PULSE}$ is limited, because the total output voltage $V_{OUT} = V_{OUT1}+V_{OUT2}$ is a constraint. The limit becomes more restrictive as the output voltage $V_{OUT}$ increases. The pulse component $P_{PULSE}$ of the power (cf. equations (1) and (2)) has a maximum $P_{PULSE,max}$ of:

$$P_{PULSE,max} = \left(1 - \left(V_{OUT} - \frac{V_{IN}}{2n}\right) \Big/ \frac{V_{IN}}{2n}\right), \quad (3)$$

wherein n is the conversion ratio of the resonant converter 21 of the back-end stage. It is noted that this limitation only applies to systems, in which the load requires a constant output power $P_{OUT}$. If the load allows a pulsation of the output power, the constraint represented by equation does not apply.

Reflecting its topology, the resonant converter 21 can be referred to as DCX-LLC converter. Sometimes, this kind of resonant converter is also referred to as "resonant DC transformer" or "resonant LLC solid state transformer".

In the embodiments described above, the neutral point N is connected to the mid-point (center node) of the bus capacitor bank as shown in Fig. 1. However, this is not necessarily the case. Fig. 7 illustrates one embodiment with a front-end stage that charges both input capacitors simultaneously, wherein the neutral point N is not connected to the mid-point of the bus capacitor bank (i.e. to the common node (center node) of capacitors $C_{IN1}$ and $C_{IN2}$). In this case, the capacitors $C_{IN1}$ and $C_{IN2}$ are charged at the same time at the double grid frequency (e.g. 100 Hz for a 50 Hz grid), wherein the resulting DC bus voltage $V_{IN}$ is only half of the DC bus voltage in the example of Fig. 2 (400 V vs. 800 V). The center node of the DC bus capacitor bank is labelled REF and can be considered as a floating ground node.

Also with the PFC AC/DC converter of Fig. 7, a power modulation / pulsation may be advantageously used to reduce the voltage ripple at the bus capacitor bank as well as the RMS current. In this way, the pulsation of the power is "forwarded" (through the back-end converter stage) to the electric load $R_{LOAD}$.

Although the invention has been illustrated and described with respect to one or more implementations, alterations and/or modifications may be made to the illustrated examples without departing from the spirit and scope of the appended claims. In particular regard to the various functions performed by the above described components or structures (units, assemblies, devices, circuits, systems, etc.), the terms (including a reference to a "means") used to describe such components are intended to correspond - unless otherwise indicated - to any component or structure, which performs the specified function of the described component (e.g., that is functionally equivalent), even though not structurally equivalent to the disclosed structure, which performs the function in the herein illustrated exemplary implementations of the invention.

**Claims**

1. A system comprising:

a capacitor bank including at least a first capacitor ($C_{IN1}$) and a second capacitor ($C_{IN2}$) coupled in series, wherein the capacitor bank is connected between a first input terminal (IN+) and a second input terminal (IN-) and wherein the first and second capacitors ($C_{IN1}$, $C_{IN2}$) are connected at a center node;

an AC/DC converter (10) configured to provide a DC input voltage ($V_{IN}$) to the capacitor bank based on an AC voltage ($V_{AC}$) provided by the AC supply;

a DC/DC switching converter (20) including a first branch (20a), a second branch (20b), and a switching circuit (30, $Q_A$-$Q_C$); the first branch (20a) being configured to convert a first voltage ($V_{IN1}$) buffered by the first capacitor ($C_{IN1}$) into an first output voltage ($V_{OUT1}$); the second branch (20b) being configured to convert a second voltage ($V_{IN2}$) buffered by the second capacitor ($C_{IN2}$) into a second output voltage ($V_{OUT2}$); and the switching circuit (30, $Q_A$-$Q_C$) being configured to provide an output voltage ($V_{OUT}$) based on the first output voltage ($V_{OUT1}$) and the second output voltage ($V_{OUT2}$);

a controller (40) configured to generate a plurality of switching signals ($S_{DCDC}$) for the DC/DC switching converter (20) to control the switching operation of the first branch (20a) and the second branch (20a) of the DC/DC switching converter (20), such that the power ($P_{OUT1}$) converted by the first branch (20a) and the power ($P_{OUT2}$) converted by the second branch (20b) are modulated oppositely to each other in synchronization with a frequency of the AC supply.

2. The system of claim 1,
wherein, for providing the output voltage ($V_{OUT}$), the switching circuit (30, $Q_A$-$Qc$) is configured to selectively connect an output of the first branch (20a) and an output of the second branch (20b) either in series or in parallel.

3. The system of claim 1 or 2,
wherein, in first branch (20a) and the second branch (20b) the power ($P_{OUT1}$, $P_{OUT2}$) converted in the respective branch is modulated between a minimum power level and a maximum power level.

4. The system of claim 3,
wherein the minimum power level is zero and the maximum power level corresponds to the maximum output power ($P_{OUT}$) provided by the DC/DC converter.

5. The system of any of claims 1 to 4,

wherein each one of the first branch (20a) and the second branch (20b) includes a galvanically isolating converter (21), which has a fixed conversion ratio, and a buck converter (22) connected downstream thereto, and wherein the controller (40) is configured to control the switching operation of the buck converters (22) such that the power ($P_{OUT1}$) converted in the first branch (20a) and the power ($P_{OUT2}$) converted in the second branch (20b) are modulated oppositely to each other.

6. The system of any of claims 1 to 5, wherein the controller (40) is configured to:

modulate the power converted in the first branch (20a) according to a first periodic function, which is in phase with the AC voltage ($V_{AC}$); and
modulate the power converted in the second branch (20b) according to a second periodic function, which is 180° phase shifted to the AC voltage ($V_{AC}$).

7. The system of any of claims 1 to 6,
wherein, during operation, the center node is connected to a neutral point (N) of an AC supply.

8. A method comprising:

converting an AC voltage ($V_{AC}$), which is provided by an AC supply, into a DC input voltage ($V_{IN}$) and applying the DC input voltage ($V_{IN}$) to a capacitor bank that is composed of a series connection of at least a first capacitor ($C_{IN1}$) and a second capacitor ($C_{IN2}$) coupled at a center point;
converting a first voltage ($V_{IN1}$) buffered by the first capacitor ($C_{IN1}$) into an first output voltage ($V_{OUT1}$) by a first branch (20a) of a DC/DC converter;

converting a second voltage ($V_{IN2}$) buffered by the second capacitor ($C_{IN2}$) into a second output voltage ($V_{OUT2}$) by a second branch (20b) of the DC/DC converter;

generating an output voltage ($V_{OUT}$) based on the first output voltage ($V_{OUT1}$) and the second output voltage ($V_{OUT2}$); and

wherein the power ($P_{OUT1}$) converted in the first branch (20a) and the power ($P_{OUT2}$) converted in the second branch (20b) is modulated oppositely to each other in synchronization with a frequency of the AC supply.

9. The method of claim 8, wherein generating the output voltage ($V_{OUT}$) includes:

connecting an output of the first branch (20a) and an output of the second branch (20b) either in series or in parallel in accordance with a selection signal.

10. The method of claim 8 or 9,

wherein the power ($P_{OUT1}$) converted in the first branch (20a) is modulated according to a first periodic function, which is in phase with the AC voltage ($V_{AC}$); and

wherein the power ($P_{OUT2}$) converted in the second branch (20b) is modulated according to a second periodic function, which is 180° phase shifted to the AC voltage ($V_{AC}$).

11. The method of any of claim 8 to 10,

wherein the AC supply is a single phase supply,

and wherein converting the AC voltage ($V_{AC}$) into a DC input voltage ($V_{IN}$) is done using a Power Factor Correction AD/DC converter (10).

12. The method of any of claims 8 to 11,

wherein the sum of power ($P_{OUT1}$) converted in the first branch (20a) and the power ($P_{OUT2}$) converted in the second branch (20b) corresponds to a set-point value.

13. A system comprising:

an capacitor bank including at least two capacitors ($C_{IN1}$, $C_{IN2}$) coupled in series, wherein the capacitor bank is connected between a first input terminal (IN+) and a second input terminal (IN-) and wherein the two capacitors ($C_{IN1}$, $C_{IN2}$) are connected at a center node;

an AC/DC converter (10) configured to provide a DC input voltage ($V_{IN}$) to the capacitor bank based on an AC supply;

a DC/DC switching converter (20) configured to convert the input voltage ($V_{IN}$) into an output voltage ($V_{OUT}$);

a controller (40) configured to generate a plurality of switching signals ($S_{DCDC}$) for the DC/DC switching converter (20) to control the switching operation of the DC/DC switching converter (20),

wherein the controller (40) is further configured to control the switching operation of the DC/DC switching converter (20) such that the electric power converted by the DC/DC converter (20) is modulated in accordance with a grid frequency of the AC supply.

14. The system of claim 13,

wherein a neutral point of the AC supply is not connected to the center node.

15. The system of claim 13 or 14,

wherein the electric power converted by the DC/DC converter (20) is modulated at a frequency that is twice the grid frequency of the AC supply.

**Amended claims in accordance with Rule 137(2) EPC.**

1. A system comprising:

a capacitor bank including at least a first capacitor ($C_{IN1}$) and a second capacitor ($C_{IN2}$) coupled in series, wherein the capacitor bank is connected between a first input terminal (IN+) and a second input terminal (IN-) and wherein the first and second capacitors ($C_{IN1}$, $C_{IN2}$) are connected at a center node;

an AC/DC converter (10) configured to provide a DC input voltage ($V_{IN}$) to the capacitor bank based on an AC voltage ($V_{AC}$) provided by the AC supply;

a DC/DC switching converter (20) including a first branch (20a), a second branch (20b), and a switching circuit (30, $Q_A$-$Q_C$); the first branch (20a) being configured to convert a first voltage ($V_{IN1}$) buffered by the first capacitor ($C_{IN1}$) into a first output voltage ($V_{OUT1}$); the second branch (20b) being configured to convert a second voltage ($V_{IN2}$) buffered by the second capacitor ($C_{IN2}$) into a second output voltage ($V_{OUT2}$); and the switching circuit (30, $Q_A$-$Q_C$) being configured to provide an output voltage ($V_{OUT}$) based on the first output voltage ($V_{OUT1}$) and the second output voltage ($V_{OUT2}$);

a controller (40) configured to generate a plurality of switching signals ($S_{DCDC}$) for the DC/DC switching converter (20) to control the switching operation of the first branch (20a) and the second branch (20a) of the DC/DC switching converter (20), such that the power ($P_{OUT1}$) converted by the first branch (20a) and the power ($P_{OUT2}$) converted by the second branch (20b) are modulated oppositely to each other in synchronization with a frequency of the AC supply.

2. The system of claim 1,
wherein, for providing the output voltage ($V_{OUT}$), the switching circuit (30, $Q_A$-$Q_C$) is configured to selectively connect an output of the first branch (20a) and an output of the second branch (20b) either in series or in parallel.

3. The system of claim 1 or 2,
wherein, in first branch (20a) and the second branch (20b) the power ($P_{OUT1}$, $P_{OUT2}$) converted in the respective branch is modulated between a minimum power level and a maximum power level.

4. The system of claim 3,
wherein the minimum power level is zero and the maximum power level corresponds to the maximum output power ($P_{OUT}$) provided by the DC/DC converter.

5. The system of any of claims 1 to 4,

wherein each one of the first branch (20a) and the second branch (20b) includes a galvanically isolating converter (21), which has a fixed conversion ratio, and a buck converter (22) connected downstream thereto, and
wherein the controller (40) is configured to control the switching operation of the buck converters (22) such that the power ($P_{OUT1}$) converted in the first branch (20a) and the power ($P_{OUT2}$) converted in the second branch (20b) are modulated oppositely to each other.

6. The system of any of claims 1 to 5, wherein the controller (40) is configured to:

modulate the power converted in the first branch (20a) according to a first periodic function, which is in phase with the AC voltage ($V_{AC}$); and
modulate the power converted in the second branch (20b) according to a second periodic function, which is 180° phase shifted to the AC voltage ($V_{AC}$).

7. The system of any of claims 1 to 6,
wherein, during operation, the center node is connected to a neutral point (N) of an AC supply.

8. A method comprising:

converting an AC voltage ($V_{AC}$), which is provided by an AC supply, into a DC input voltage ($V_{IN}$) and applying the DC input voltage ($V_{IN}$) to a capacitor bank that is composed of a series connection of at least a first capacitor ($C_{IN1}$) and a second capacitor ($C_{IN2}$) coupled at a center point;
converting a first voltage ($V_{IN1}$) buffered by the first capacitor ($C_{IN1}$) into a first output voltage ($V_{OUT1}$) by a first branch (20a) of a DC/DC converter;
converting a second voltage ($V_{IN2}$) buffered by the second capacitor ($C_{IN2}$) into a second output voltage ($V_{OUT2}$) by a second branch (20b) of the DC/DC converter;
generating an output voltage ($V_{OUT}$) based on the first output voltage ($V_{OUT1}$) and the second output voltage ($V_{OUT2}$); and
wherein the power ($P_{OUT1}$) converted in the first branch (20a) and the power ($P_{OUT2}$) converted in the second branch (20b) is modulated oppositely to each other in synchronization with a frequency of the AC supply.

9. The method of claim 8, wherein generating the output voltage ($V_{OUT}$) includes:
connecting an output of the first branch (20a) and an output of the second branch (20b) either in series or in parallel in accordance with a selection signal.

10. The method of claim 8 or 9,

wherein the power ($P_{OUT1}$) converted in the first branch (20a) is modulated according to a first periodic function, which is in phase with the AC voltage ($V_{AC}$); and
wherein the power ($P_{OUT2}$) converted in the second branch (20b) is modulated according to a second periodic function, which is 180° phase shifted to the AC voltage ($V_{AC}$).

11. The method of any of claim 8 to 10,

wherein the AC supply is a single phase supply,
and wherein converting the AC voltage ($V_{AC}$) into a DC input voltage ($V_{IN}$) is done using a Power Factor Correction AC/DC converter (10).

12. The method of any of claims 8 to 11,
wherein the sum of power ($P_{OUT1}$) converted in the first branch (20a) and the power ($P_{OUT2}$) converted in the second branch (20b) corresponds to a set-point value.

Fig. 1

Fig. 2

**(a)**

**(b)**

# Fig. 3

# Fig. 4

(a)

(b)

Fig. 5

(a)

(b)

Fig. 6

Fig. 7

PFC converter
(front-end stage 10)

primary side
(back-end stage 20)

Europäisches
Patentamt

European
Patent Office

Office européen
des brevets

**EUROPEAN SEARCH REPORT**

Application Number

EP 24 18 8081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 938 148 A (HEFEI JUZHI ELECTRIC CO LTD) 23 August 2022 (2022-08-23) * figures 1, 2, 3, 5, 6 * ----- | 1-12 | INV. H02M1/00 H02M1/15 H02M1/42 |
| X | LI ZHEQING ET AL: "Partial Fluctuating Power Control of Resonant Converter for Solid-State Transformer", 2022 IEEE APPLIED POWER ELECTRONICS CONFERENCE AND EXPOSITION (APEC), IEEE, 20 March 2022 (2022-03-20), pages 770-776, XP034124764, DOI: 10.1109/APEC43599.2022.9773455 [retrieved on 2022-05-19] | 13-15 | H02M3/00 H02M3/158 H02M3/28 ADD. H02J7/02 H02M1/10 |
| Y | * Section III; figures 6-10 * ----- | 1-12 | |
| X | LATURKAR AKSHAY ET AL: "Dual Active Half Bridge Converter with Integrated Active Power Decoupling for On-Board EV Charger", 2022 IEEE INTERNATIONAL CONFERENCE ON POWER ELECTRONICS, SMART GRID, AND RENEWABLE ENERGY (PESGRE), IEEE, 2 January 2022 (2022-01-02), pages 1-6, XP034091250, DOI: 10.1109/PESGRE52268.2022.9715900 [retrieved on 2022-02-16] * Section II; figure 1 * ----- -/-- | 13-15 | |

| | | TECHNICAL FIELDS SEARCHED (IPC) |
|---|---|---|
| | | H02M H02J B60L |

The present search report has been drawn up for all claims

| Place of search | Date of completion of the search | Examiner |
|---|---|---|
| The Hague | 11 December 2024 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 24 18 8081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MESSAOUDI HANEN ET AL: "Design of a smart and fast charger for Electric Vehicles", 2022 IEEE INTERNATIONAL CONFERENCE ON ELECTRICAL SCIENCES AND TECHNOLOGIES IN MAGHREB (CISTEM), IEEE, vol. 4, 26 October 2022 (2022-10-26), pages 1-6, XP034297837, DOI: 10.1109/CISTEM55808.2022.10043937 [retrieved on 2023-02-20] * figures 1-4 * | 5 | |
| A | US 2023/006540 A1 (WANG YI-CHAO [CN] ET AL) 5 January 2023 (2023-01-05) * paragraph [0005] - paragraph [0006]; figures 1, 2A, 2B * | 11 | |
| A | DAO NGOC DAT ET AL: "Modulation and Control of Single-Stage Bidirectional Isolated Direct-Matrix-based AC-DC Converters", 2019 10TH INTERNATIONAL CONFERENCE ON POWER ELECTRONICS AND ECCE ASIA (ICPE 2019 - ECCE ASIA), THE KOREAN INSTITUTE OF POWER ELECTRONICS (KIPE), 27 May 2019 (2019-05-27), pages 2278-2283, XP033597063, [retrieved on 2019-08-13] * Section II.A; figures 1-3 * | 1-15 | **TECHNICAL FIELDS SEARCHED (IPC)** |

The present search report has been drawn up for all claims

| Place of search | Date of completion of the search | Examiner |
|---|---|---|
| The Hague | 11 December 2024 | Madouroglou, E |

EPO FORM 1503 03.82 (P04C01)

page 2 of 2

## ANNEX TO THE EUROPEAN SEARCH REPORT
## ON EUROPEAN PATENT APPLICATION NO.

EP 24 18 8081

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | | Publication date | Patent family member(s) | | Publication date |
|---|---|---|---|---|---|
| CN 114938148 | A | 23-08-2022 | NONE | | |
| US 2023006540 | A1 | 05-01-2023 | CN | 115589139 A | 10-01-2023 |
| | | | US | 2023006540 A1 | 05-01-2023 |

EPO FORM P0459

For more details about this annex : see Official Journal of the European Patent Office, No. 12/82